# EUROPEAN PATENT APPLICATION

(11) **EP 1 862 697 A1**
(43) Date of publication of application: **05.12.2007**
(21) Application number: 06388038.9
(22) Date of filing: 30.05.2006
(51) Int. Cl.: F16F 15/14, F16F 9/53

(54) **Torsional vibration damper**

(71) Applicant: The Technical University of Denmark (DTU), 2800 Lyngby (DK)
(72) Inventor: Klit, Peter, 3480 Fredensborg (DK); Santos, Ilmar Ferreira, 2100 Copenhagen Ø (DK); Nissen, Rasmus Thranberg, 2450 Copenhagen SV (DK); Hansen, Henrik Baldur Nørregård, 2400 Copenhagen NV (DK)
(74) Representative: Sundien, Thomas

(57) **Abstract**

Torsional vibration damper (1;20;30;40;50) which is suitable for dampening the motion of a rotatable element, said torsional vibration damper comprising an "actuation" element (3) which is connectable to the rotatable element, an "inertia" element (5) arranged co-axially and rotatably with said actuation element, an enclosed volume (8) between said inertia element and said actuation element where a cross section through said enclosed volume taken on a plane which is parallel to the axis of the actuation element comprises at least one "axial" portion (11) which is arranged essentially parallel to the axis of the actuation element, an Electro-Rheological or a Magneto-Rheological fluid (9) arranged at least in a part of said enclosed volume, and an electric or a magnetic field generator (7) which generates an electric or a magnetic field which passes through at least a portion of said enclosed volume. The field generator is integrated into the torsional vibration damper in such a way that a majority of the magnetic or electric field lines (12) generated by the field generator pass through said "axial" portion of said enclosed volume. In this way, an effective torsional vibration damper is provided.

## Description

### Technical field of the invention

The current disclosure relates to a torsional vibration damper which is suitable for dampening the motion of a rotatable element, said torsional vibration damper comprising an "actuation" element which is connectable to the rotatable element, an "inertia" element arranged co-axially and rotatably with said actuation element, an enclosed volume between said inertia element and said actuation element where a cross section through said enclosed volume taken on a plane which is parallel to the axis of the actuation element comprises at least one "axial" portion which is arranged essentially parallel to the axis of the actuation element, an Electro-Rheological or a Magneto-Rheological fluid arranged at least in a part of said enclosed volume, and an electric or a magnetic field generator which generates an electric or a magnetic field which passes through at least a portion of said enclosed volume.

Please note that for the purpose of this specification, the term "actuation" element should be understood as that part of the torsional vibration damper which is connected to the rotatable element which is to be dampened. The term "inertia" element is that part of the torsional vibration damper which is not directly connected to the rotatable element which is to be dampened, but which rotates due to the interaction between the fluid, the actuation element and the inertia element. Furthermore, the term "field generator" should be understood as the element which generates an electric or a magnetic field. A common example of such a field generator is a coil. In addition, the term "enclosed volume" should be understood for the purpose of this specification as a volume which is sealed such that a fluid can be arranged in said volume without leaking out. The enclosed volume should be arranged between the actuation element and the inertia element, but other elements could also be in contact with the enclosed volume.

Torsional vibration dampers are used in many different applications. One typical example is at the end of a crankshaft of an internal combustion engine. For example, large ship motors usually have a torsional vibration damper mounted on the crankshaft to dampen the large vibrations which occur in the crankshaft during operation. Also, smaller engines, for example certain car engines, also use torsional vibration dampers. Another example of a common application of a torsional vibration damper is a system which comprises a long shaft. A good example of such a system is seen in many wind turbines.

It should be noted that the torsional vibration dampers disclosed in this specification can be used in many different applications and are not limited to the example applications disclosed herein.

### Description of related art

In traditional torsional vibration dampers, a simple viscous fluid, such as oil, is arranged in the enclosed volume. In this way, when the actuation element is rotated due to movement of the rotatable element, the inertia element is also caused to rotate due to the viscous friction present between the actuation element, the inertia element and the viscous fluid. In operation, the inertia element rotates at a speed which is essentially the same as the average speed of the rotatable element and the actuation element rotates at the same speed as the rotatable element. Due to the vibrations in the rotatable element to be damped, there is a relative motion between the inertia element and the actuation element which is approximately equal to the magnitude of the vibrations in the shaft. This relative motion leads to damping. As should be obvious, the viscosity of the fluid arranged in the enclosed volume has a large effect on the damping of the torsional vibration damper.

In recent years, new types of fluids have been developed which are called Electro-Rheological (ER) and Magneto-Rheological (MR) fluids. These fluids are well know to persons skilled in the art and won't be described in detail in this specification. However, the basic principle of ER and MR fluids is that the fluids comprise a number of particles which react to an electric or a magnetic field in such a way that the viscosity of the fluid can be increased by applying an electric or a magnetic field respectively.

Due to the possibility of directly controlling the viscosity of the fluid, ER and MR fluids have been used in many different industrial situations where viscosity control is desired. One area which has seen a lot of activity is linear vibration dampers. MR fluids have also been applied to torsional vibration dampers as disclosed by EP 0 980 991 A1. However the torsional vibration damper disclosed by EP 0 980 991 A1 does not function satisfactorily.

### Summary of the invention as claimed

It is therefore a first aspect of the invention as claimed to provide a torsional vibration damper of the kind mentioned in the introductory paragraph which is better than those known in the prior art.

The invention as claimed provides a better torsional vibration damper in that said field generator is integrated into the torsional vibration damper in such a way that a majority of the magnetic or electric field lines generated by the field generator pass through said axial portion of said enclosed volume. By arranging the field generator in this way, the effect of the magnetic field is optimized and a lower power consumption is achieved. Furthermore, during rotation of the damper, the particles in the MR or ER fluid will sediment, being pressed outwardly due to the centrifugal forces. Due to this the concentration of the particle will be different at different points in the enclosed volume. However, the concentration in the axial portion should be relatively the same.

Therefore, by arranging the field lines in such a way that the majority pass through the axial portion, a uniform effect is achieved.

Furthermore, the magnetic or electric field lines could be arranged such that they pass essentially perpendicularly through said axial portion of said enclosed volume. In this way, the distance that the field lines have to travel through the enclosed volume is reduced.

In one embodiment of the torsional vibration damper, the field generator can be arranged such that it is stationary with respect to the inertia element and the actuation element. In this way, it is easy to transfer electrical power to the field generator. The use of slip rings or other power transfer elements are not needed.

In this embodiment, the torsional vibration damper could further comprise an insulating element made from a material with a low magnetic permeability or with a low electric conductivity arranged adjacent to the field generator, such that the magnetic or electric field lines pass around said insulating element. By using non magnetic materials strategically placed around the field generator, the field lines can be effectively steered in a particular path. In this way, it is possible to ensure that the field lines pass through the enclosed volume in the place and orientation which is desired.

In order to fix the field generator in place, the field generator could be arranged in a housing which is arranged co-axially with the actuation element. In order to ensure the geometrical alignment between the field generator and the actuation element, a bearing could be arranged between the housing and the actuation element.

In another embodiment, the field generator could be fixed to the actuation element or to the inertia element. In this way, the torsional vibration damper will comprise only two elements which are rotatable with respect to each other. Slip rings could, for example, be used to transfer power to the field generator. However, slip rings will demand maintenance once in a while. There are however other methods of transferring power between a stationary and a rotating object which are non contact, for example inductive systems.

In a further embodiment, the torsional vibration damper could comprise an "axial" portion on either side of the field generator and the field lines could pass perpendicularly through both axial portions. In this way, the forces due to the field will be entirely in one direction. This will make the mechanical design of the damper more simple.

Since ER and MR fluid comprise particles the torsional vibration damper could further comprise seals which prevent the ER or the MR fluid arranged in the enclosed volume from contacting the bearings. In this way, the bearings are protected from the fluid which could cause unnecessary wear on the bearings.

In order to avoid problems with too much sedimentation of the ER or the MR fluid, the enclosed volume could be filled with an amount of ER or MR fluid such that during operation, essentially only the "axial" portion of the enclosed volume is filled with fluid. In this way, the sedimentation of the fluid will be reduced to a minimum.

In another embodiment, the enclosed volume could be filled with an ER or an MR fluid having a concentration of particles lower than normal ER or MR fluids. In this way, when the damper is not rotating, the ER or the MR fluid is not particularly effective as an ER or an MR fluid. However, once the damper has been rotating for a while, the particles of the fluid will sediment into the axial portion, thereby increasing the concentration of particles in the axial portion.

In this way, during normal operation, the fluid in the axial portion will have the correct concentration and behave as an effective ER or MR fluid.

It should be emphasized that the term "comprises/comprising" when used in this specification is taken to specify the presence of stated features, integers, steps or components but does not preclude the presence or addition of one or more other features, integers, steps, components or groups thereof.

Furthermore, it should be emphasized that the current specification discloses a number of inventions, but only a single invention has been claimed. It should however, be obvious to the person skilled in the art, that the other inventions could be used independently of the invention as claimed.

### Brief description of the drawings

In the following, a number of embodiments of torsional vibration dampers will be described in greater detail with reference to the enclosed figures. It should be emphasized that the embodiments shown are used for example purposes only and should not be used to limit the scope of the invention as claimed. Rather, the embodiments seek to describe in more details the different aspects of the current disclosure.
Figure 1 shows a front perspective view of a first embodiment of a torsional vibration damper.
Figure 2 shows a rear perspective view of the torsional vibration damper shown in figure 1.
Figure 3 shows a cross section view through the torsional vibration damper shown in figure 1. The cross section is taken according to the section line III-III shown in figure 1.
Figure 4 shows a cross section through a second embodiment of a torsional vibration damper.
Figure 5 shows a cross section through a third embodiment of a torsional vibration damper.
Figure 6 shows a cross section through a fourth embodiment of a torsional vibration damper.
Figure 7 shows a cross section through a fifth embodiment of a torsional vibration damper.
The cross section views of figures 4-7 were taken in a similar orientation as the cross section view of figure 3.

### Detailed description of the embodiments

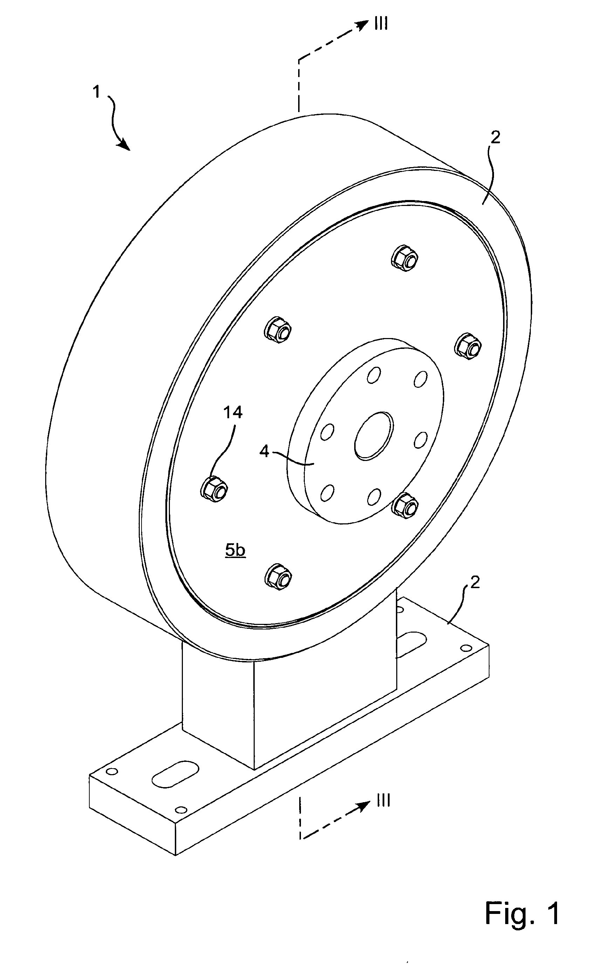

The first embodiment 1 of a torsional vibration damper shown in figures 1-3 comprises a housing 2, an actuation element 3 fixedly mounted on a drive shaft 4, an inertia element 5 (5a,5b) rotatably mounted on the drive shaft 4 via a bearing 6, and a coil 7 fixedly attached to the housing 2 acting as a magnetic field generator. An enclosed volume 8 is arranged between the actuation element 3 and the inertia element 5. Furthermore, the enclosed volume 8 is filled with a small amount of Magneto-Rheological (MR) fluid 9.

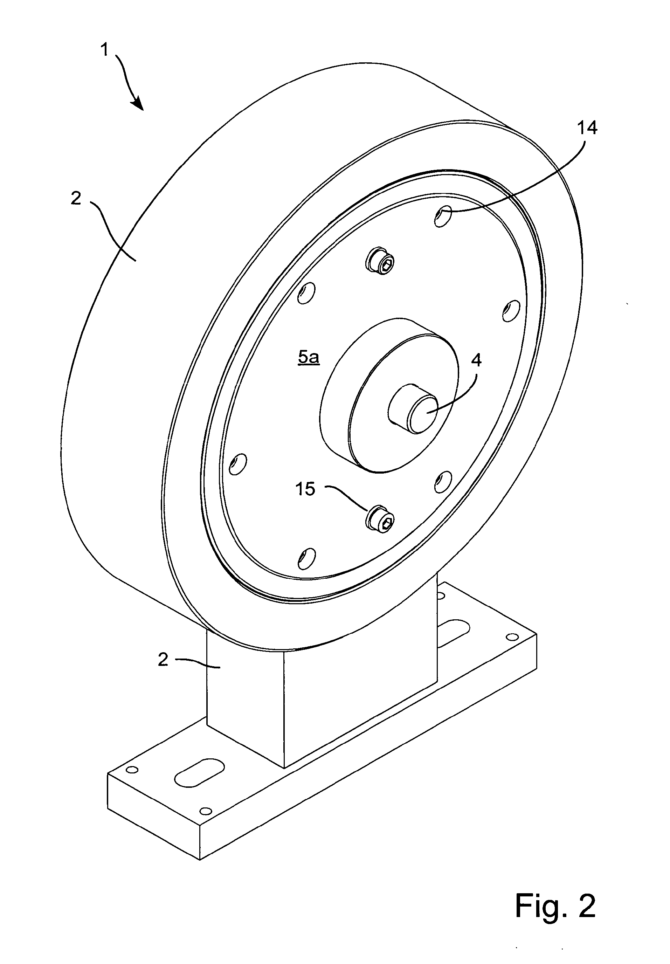

As can be seen from figures 1 and 2, the housing 2, the coil 7, the actuation element 3 and the inertia element 5 are all essentially circular. Furthermore, the housing 2 with the coil 7, the actuation element 3, and the inertia element 5 are all co-axial and are all rotatable with respect to each other. The housing 2 with the coil 7 is however fixedly attached to a fixed surface 10. Since the coil 7 is stationary with respect to the fixed surface 10, the power supply (not shown) which supplies power to the coil can be mounted on the fixed surface and connected directly to the coil. There is therefore no need for slip rings or other means for transferring power between a rotating element and a stationary element. This makes the Torsional Vibration Damper simple to maintain.

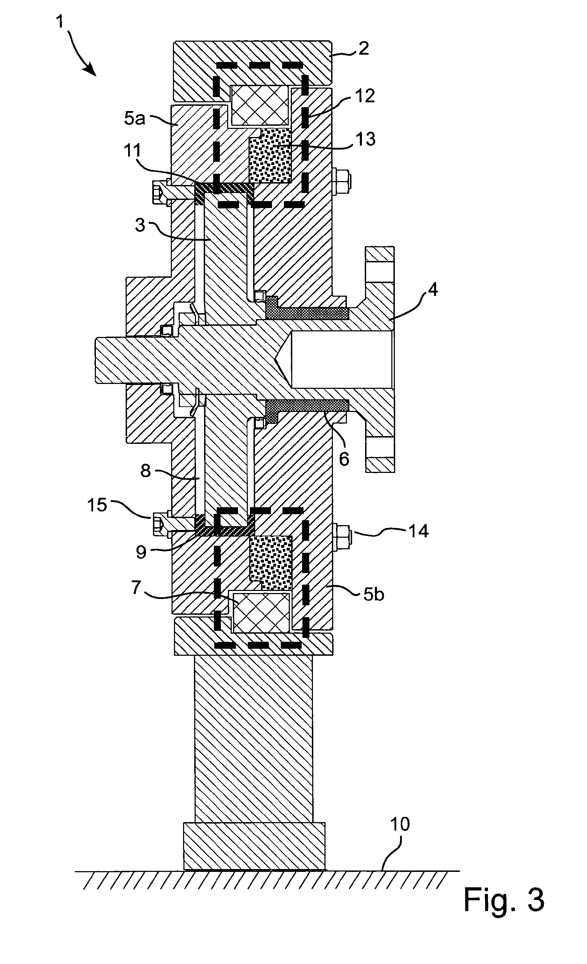

As can best be seen in figure 3, the cross section through the enclosed volume 8 taken on a plane which is parallel to the axis of the actuation element comprises an "axial" portion 11 which is essentially parallel to the axis of the actuation element 3. The "axial" portion 11 could also be called an "axial" gap.

During normal operation, the inertia element 5 rotates and the small amount of MR fluid which is arranged in the enclosed space 8, is pressed outwards due to the centrifugal forces. The amount of MR Fluid is chosen such that the MR fluid just fills up the axial gap 11 during normal operation.

The advantage of using such a small amount of MR fluid is that problems due to sedimentation of the MR fluid are avoided. Since most MR/ER fluids are suspensions of particles in a viscous fluid, constant rotation in the inertia element will cause the particles in the fluid to be pressed outwards due to the centrifugal forces. This results in sedimentation of the particles in the axial gap 11. If the entire enclosed volume is filled with MR/ER fluid, the amount of sedimentation is so great that the actuation element 3 and the inertia element 5 can lock together. However, when a small amount of MR/ER fluid is used as shown in the current embodiment, there is essentially no sedimentation and the torsional vibration damper functions without any sedimentation problems.

As can be seen from figure 3, the coil 7 generates a magnetic field 12 which passes around the coil 7 in a closed loop. As is known to the person skilled in the art of magnetics, a magnetic field will try to follow the path which has the highest permeability. For example, the magnetic field will rather go through a material which has a high magnetic permeability, for example steel, than a material which has a low magnetic permeability, for example aluminium. By choosing the materials of the inertia ring and the placement of the coil in a particular manner, the magnetic field can be forced to follow a certain path. In the current embodiment, an insulating element, in this case an aluminium ring 13, has been placed beside the coil 7. The rest of the inertia element 5 and the actuation element 3 are made of steel. In this way, the magnetic field generated by the coil will follow the steel and flow around the aluminium ring 13. In this way, it is possible to force the majority of the magnetic field lines 12 to flow through the axial gap 11 of the enclosed volume 8. In this case, the field lines flow perpendicularly through the gap. This is shown in figure 3.

By forcing the majority of the magnetic field through the axial gap 11, the effect of the magnetic field on the MR fluid present in the axial gap is maximized. This reduces the power and energy required to use the torsional vibration damper.

Furthermore, it should be noted that the magnetic field exerts a force on the actuation element 3 in a direction which is between the coil 7 and the actuation element 3 and on the inertia element in the direction between the coil 7 and the inertia element 5. Due to the placement of the coil in the embodiment of figure 3, the forces between the elements are essentially radial. This means that the forces cancel each other out around the damper.

However, it should be noted that the above described forces are inversely proportional to the distance between the element and the coil. Therefore, if there is a misalignment between the coil, the actuation element and the inertia element, there will be varying radial forces. Therefore, proper alignment of the housing, the actuation element and the inertia element is very important in this embodiment.

It should be noted that the embodiment shown in figure 3 has a drive shaft 4 which goes through the entire damper. This allows a shaft to be connected to either side of the drive shaft 4. However, it should be obvious to the person skilled in the art, that if the damper were arranged at the end of a rotating shaft, then the damper could be made simpler, in that the drive shaft 4 did not go all the way through the damper.

Figures 1-3 also show some more details of the first embodiment of a torsional vibration damper. Bolts 14 which go through the entire inertia element 5 hold the different parts of the inertia element 5a,5b,13 together. Furthermore, "filling" bolts 15 are present to allow the fluid to be filled into the damper. The figures also show some additional details such as seals, flanges, etc which won't be described in more detail here as they are common technical features which the person skilled in the art of mechanical engineering should easily be able to develop by him or herself.

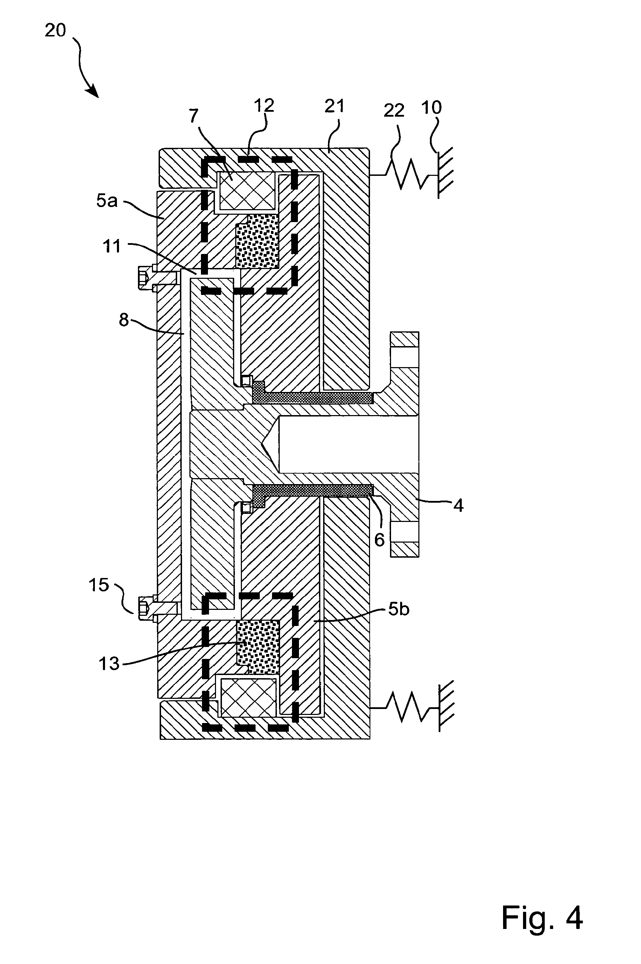

Figure 4 shows a second embodiment of a torsional vibration damper. The second embodiment 20 is very similar to the first embodiment and therefore the same reference numerals will be used for the same elements. Note that the MR fluid is not shown in the embodiments shown in figures 4-7 in order to simplify the figures.

The main difference between the first embodiment 1 and the second embodiment 20 is that instead of the housing being fixedly mounted on a fixed surface, the housing 21 is rotatably arranged on the drive shaft 4 via the bearing 6. In this way, the proper alignment of the coil, the actuation element 3 and the inertial element 5 is ensured since all the elements have their reference on the drive shaft 4. The housing 21 is fastened to a fixed surface 10 via elastic mounts 22 which keep the housing from rotating. It is therefore possible to transfer power to the coil in a simple manner. Due to the elastic nature of the mounts 22, the mounts do not impose any alignment constraints on the housing 21. The mounts can therefore absorb small misalignments in the mechanism, for example those due to manufacturing tolerances.

The other difference between the first embodiment 1 and the second embodiment 20 is that the drive shaft 4 does not go all the way through the damper. This simplifies the construction of the damper and is good for situations where the damper is mounted on the end of a shaft. However, it should be obvious to the person skilled in the art, that if the damper were to be mounted in the middle of a shaft, the damper could be modified in such a way that the drive shaft 4 went all the way through the damper. The inertia element 5 and/or the housing could then be supported on the drive shaft via a bearing (not shown) on either side of the actuation element 3.

The remaining features of the second embodiment of the damper 20 are the same as the features of the first embodiment 1. The reader is therefore referred to the description of the first embodiment 1 for the remaining functional details.

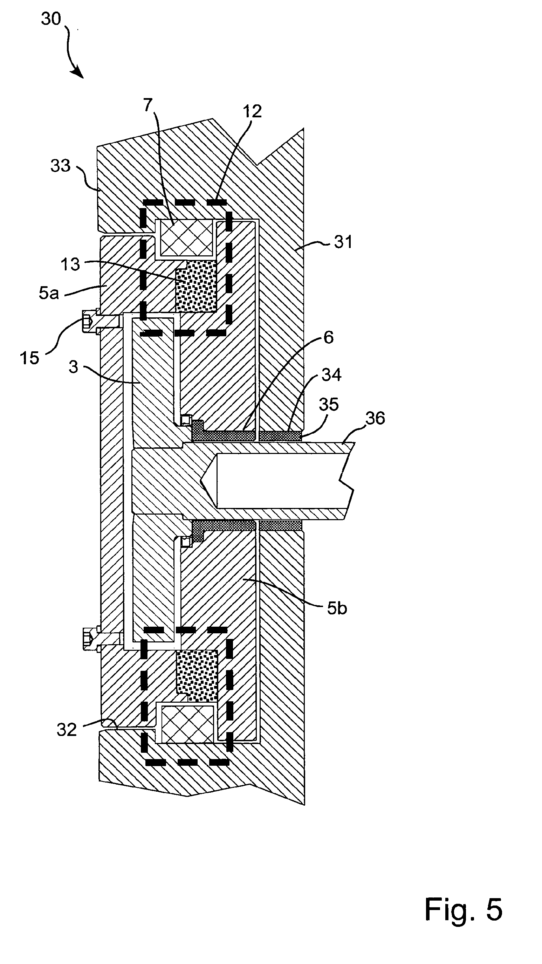

The third embodiment 30 shown in figure 5, is an embodiment which shows one way of integrating a torsional vibration damper directly into an internal combustion engine. The third embodiment 30 is very similar in principle to the first and second embodiments and the same reference numerals will be used to refer to the same elements.

In this case, the housing 31 which holds the coil 7 is machined directly into the engine block 33 of the combustion engine. A circular cavity 32 has been machined into the side of the engine block 33. The coil 7 is arranged in this circular cavity. Since the coil is fixed to the engine block, it is easy to transfer the power from the power supply (not shown) to the coil.

Furthermore, since the cavity 32 is machined directly into the engine block, the reference for the cavity can be based on the opening 34 for the crankshaft bearing 35. This ensures that the alignment between the crankshaft 36 and the coil 7 can be very precise. In the case where the damper is integrated into the motor during the initial construction of the motor, the opening for the crankshaft bearing and the circular cavity can be machined in the same manufacturing step.

The actuation element 3 and the inertia element 5 are then respectively fixedly mounted and rotatably mounted on the end of the crankshaft 36. The remaining details of the third embodiment are similar to the details of the first embodiment 1. The reader is therefore referred to the description of the first embodiment 1 for the remaining functional details.

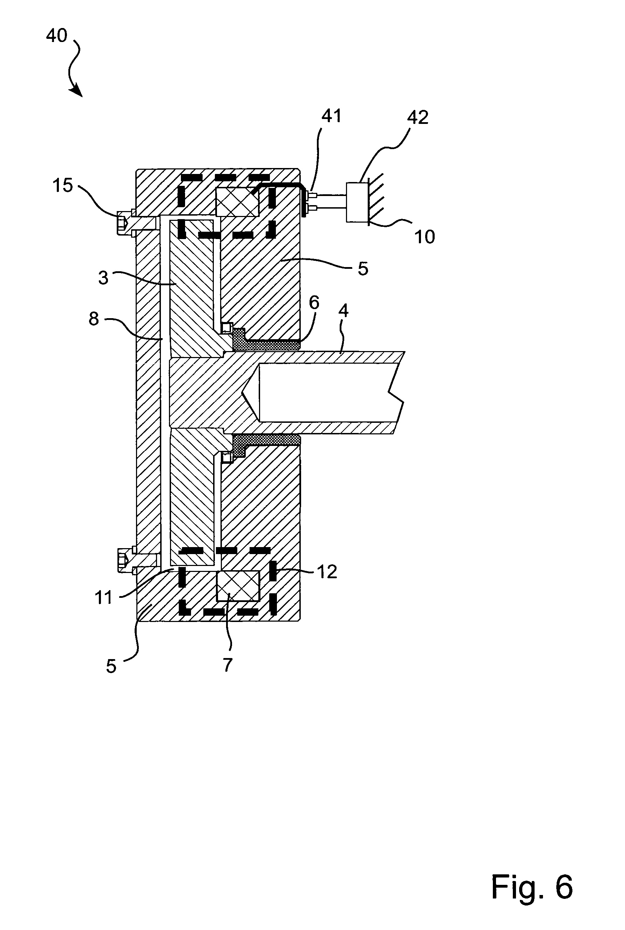

The fourth embodiment 40 shown in figure 6 again makes use of a similar construction as the first embodiment 1, and as such, the same reference numerals will be used to refer to the same elements.

However, in the fourth embodiment, the coil 7 is fixedly attached to the inertia element 5. There is therefore no need for a housing to support the coil and the manufacturing of the damper is easier since only two elements need to be aligned instead of three as was the case in the first three embodiments. However, the disadvantage of fixedly attaching the coil to the inertia element is that the coil rotates with the inertia element and means for transferring power between a rotating object and a stationary object are therefore necessary. The solution chosen in the fourth embodiment is to use slip rings 41. In this way, the power supply 42 which is fastened to a fixed surface 10, is connected to the coil 7 via slip rings. Slip rings are well known to the person skilled in the art and won't be described in more detail here.

It is to be noted that since the coil is directly mounted on the inertia element, there is no need for an aluminium element to block the magnetic field lines. In this case, the coil 7 is placed at one edge of the actuation element 3 and in this way, the field lines flow essentially perpendicularly through the axial gap 11.

Due to the placement on the side of the actuation element, there will be a greater axial force between the inertia element and the actuation element. The bearing 6 should therefore be designed to take these axial forces into consideration.

The remaining functional details of the fourth embodiment are similar to the functional details of the first embodiment, and the reader is therefore referred to the description of the first embodiment for more details of the functional details.

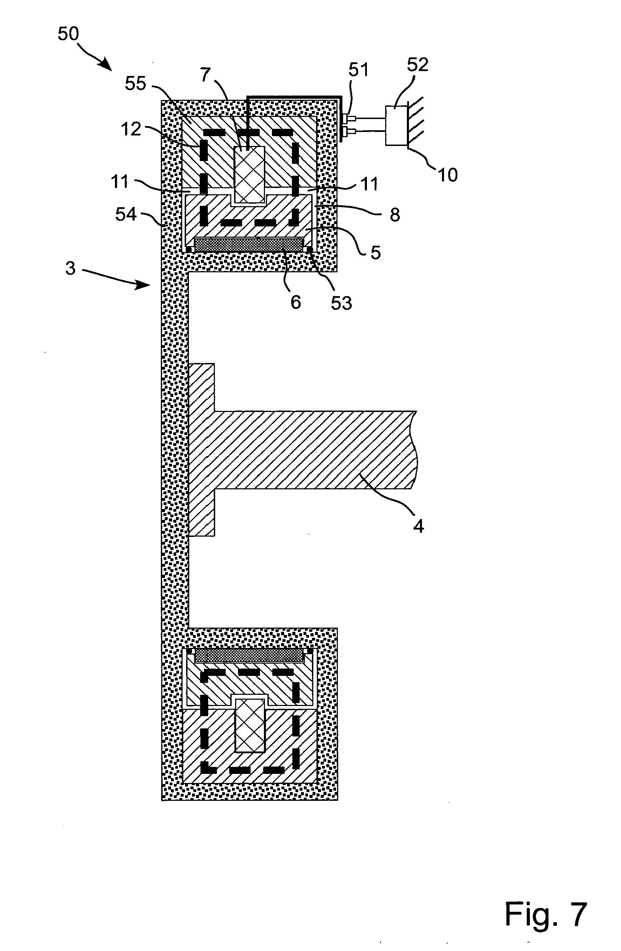

The fifth embodiment 50 shown in figure 7 is similar to the fourth embodiment 40, in that it too also only has two elements which rotate with respect to each other. However, in this case, the coil is fixed to the actuation element instead of the inertia element. As with the fourth embodiment, the fact that the coil is fixed to actuation element means that the manufacturing process is less demanding on the tolerances since only two elements need to be aligned instead of three. However as with the fourth embodiment, slip rings 51 or other power transfer mechanisms are needed to transfer power from the power supply 52 to the coil 7.

In this embodiment, the inertia element 5 is a ring which is mounted inside an annular cavity in the actuation element 3. The inertia element 5 is rotatably arranged with respect to the actuation element 3 via a bearing 6. It should be noted that the actuation element 3 has been shown as a single element in the figure in order to simplify the figure, however, it should be obvious to the person skilled in the art that the actuation element would be comprised of more than one part in order for the elements arranged inside the annular cavity to be mounted. As with the previous embodiments, an "axial" gap 11 is arranged between the actuation element 55 and the inertia element 5.

Note that, in comparison to EP 0 980 991 A1, the coil 7 is in this case mounted directly adjacent the inertia element 5 and there is no other steel element between the coil and the inertia element. This ensures that the magnetic field is not "short circuited", but is allowed to flow through the axial gap 11 at full strength.

It should also be noted that the coil 7 is arranged such that it protrudes slightly into a slot in the inertia element 5. In this way, it is ensured that the magnetic field lines 12 pass through an axial gap 11 on both sides of the coil 7. In this way, the forces due to the magnetic field are entirely radial and there is no axial component at all. Since the damper is circular, the forces cancel each other out and there is no resultant net force acting on the inertia element due to the magnetic field. In addition, since the inertia element 5 is supported on the actuation element 3 via the bearing 6, the co-axial alignment between the two elements is ensured.

Also note that the housing 54 of the actuation element is made from aluminium whereas the core 55 of the actuation element is made from steel. In this way, the field is prevented from flowing around the inertia element 5 and is instead forced through the axial gaps 11. If the housing 54 were made from steel, there would be a risk that the magnetic field lines would run in the housing 54 instead of through the axial gaps 11.

Seals 53 are present between the inertia element 5 and the actuation element 3 which prevent the MR fluid from reaching the bearing 6.

It should be noted that in the above embodiments, the "axial gap" has been essentially parallel to the axis of the actuation element. However, the "axial" gap could assume other angles to the axis of the actuation element. For example, it could be imagined that the angle was between 0° and 45°.

It is also to be noted that the figures and the above description have shown the example embodiments in a simple and schematic manner. The internal electronic and mechanical details have not been shown in great detail since a person skilled in the art of electrical and/or mechanical engineering should be familiar with these details and they would just unnecessarily complicate this description.

Furthermore it should also be noted that the current specifications discloses a number of different inventions. Even though the claims are grouped under a single inventive concept, the person skilled in the art should be able to see that the different inventions disclosed by the specification could be used independently of the single inventive concept claimed.

For example, a stationary coil could be used independently of the orientation of the magnetic fields lines and the arrangement of the coil. In another example, the technique of using a small amount of MR/ER fluid in order to avoid the problems associated with sedimentation, could be used without the specified orientation of the magnetic field lines.

Furthermore, all the example embodiments described in this specification have used MR fluid and a magnetic coil. However, it should be obvious to the person skilled in the art, that en ER fluid could also be used together with an electric field generator.

## Claims

1. Torsional vibration damper (1 ;20;30;40;50) which is suitable for dampening the motion of a rotatable element, said torsional vibration damper comprising:
- an "actuation" element (3) which is connectable to the rotatable element,
- an "inertia" element (5) arranged co-axially and rotatably with said actuation element,
- an enclosed volume (8) between said inertia element and said actuation element where a cross section through said enclosed volume taken on a plane which is parallel to the axis of the actuation element comprises at least one "axial" portion (11) which is arranged essentially parallel to the axis of the actuation element,
- an Electro-Rheological or a Magneto-Rheological fluid (9) arranged at least in a part of said enclosed volume, and
- an electric or a magnetic field generator (7) which generates an electric or a magnetic field which passes through at least a portion of said enclosed volume,
**characterized in that** said field generator is integrated into the torsional vibration damper in such a way that a majority of the magnetic or electric field lines (12) generated by the field generator pass through said "axial" portion of said enclosed volume.

2. Torsional vibration damper (1 ;20;30;40;50) according to claim 1, **characterized in that** said magnetic or electric field lines (12) pass essentially perpendicularly through said axial portion (11) of said enclosed volume (8).

3. Torsional vibration damper (1;20;30) according to claims 1 or 2, **characterized in that** the field generator (7) is stationary with respect to the inertia element (5) and the actuation element (3).

4. Torsional vibration damper (1;20;30) according to claim 3, **characterized in that** the torsional vibration damper further comprises an insulating element (13) made from a material with a low magnetic permeability or with a low electric conductivity arranged adjacent to the field generator (7), such that the magnetic or electric field lines (12) pass around said insulating element.

5. Torsional vibration damper (1 ;20;30) according to any one of claims 1-4,
**characterized in that** said field generator (7) is arranged in a housing (2) which is arranged co-axially with the actuation element (3).

6. Torsional vibration damper (20;30) according to claim 5, **characterized in that** there is a bearing (6;35) between the housing (21;31) and the actuation element (3).

7. Torsional vibration damper (40;50) according to claims 1 or 2, **characterized in that** the field generator (7) is fixed to the actuation element (3) or to the inertia element (5).

8. Torsional vibration damper (50) according to claim 7, **characterized in that** there is an "axial" portion (11) on either side of the field generator (7) and the field lines (12) pass perpendicularly through both "axial" portions.

9. Torsional vibration damper (1;20;30;40;50) according to any one of claims 1-8, **characterized in that** the torsional vibration damper further comprises seals (53) which prevent the ER or the MR fluid (9) arranged in the enclosed volume (8) from contacting the bearings (6;35).

10. Torsional vibration damper (1;20;30;40;50) according to any one of claims 1-9, **characterized in that** the enclosed volume (8) is filled with an amount of ER or MR fluid (9) such that during operation, essentially only the "axial" portion (11) of the enclosed volume is filled with fluid.

11. Torsional vibration damper (1;20;30;40;50) according to any one of claims 1-9, **characterized in that** the enclosed volume (8) is at least partly filled with an ER or an MR fluid having a concentration of particles lower than normal ER or MR fluids.
